(19)

Europäisches
Patentamt
European
Patent Office
Office européen
des brevets

(11) EP 4 358 172 A1

(12) EUROPEAN PATENT APPLICATION
published in accordance with Art. 153(4) EPC

(43) Date of publication:
24.04.2024 Bulletin 2024/17

(51) International Patent Classification (IPC):
H01M 4/04 (2006.01)     H01M 4/13 (2010.01)
H01M 4/139 (2010.01)     H01M 4/02 (2006.01)

(21) Application number: 23812043.0

(22) Date of filing: 12.05.2023

(52) Cooperative Patent Classification (CPC):
H01M 4/02; H01M 4/04; H01M 4/13; H01M 4/139

(86) International application number:
PCT/KR2023/006454

(87) International publication number:
WO 2023/229269 (30.11.2023 Gazette 2023/48)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 25.05.2022 KR 20220064000

(71) Applicant: LG Energy Solution, Ltd.
Seoul 07335 (KR)

(72) Inventors:
• SHIN, Jung Il
  Daejeon 34122 (KR)
• KIM, Ki Woong
  Daejeon 34122 (KR)

(74) Representative: Plasseraud IP
66, rue de la Chaussée d'Antin
75440 Paris Cedex 09 (FR)

(54) **ELECTRODE MANUFACTURING DEVICE AND ELECTRODE MANUFACTURING METHOD USING SAME**

(57)     Disclosed herein relates to an electrode manufacturing device and an electrode manufacturing method using the same, wherein the electrode manufacturing device and the electrode manufacturing method have a configuration of applying a first electrode slurry to a first side of an electrode sheet transported in a horizontal direction with respect to a direction in which gravity acts, and applying a second electrode slurry to a second side of an electrode sheet transported in a direction perpendicular to a direction in which gravity acts, and then drying the electrode in two stages, which can improve both processability and productivity in electrode manufacturing. In addition, the manufactured electrode has excellent adhesion force between the electrode sheet and the active material layer, and the active material layer formed on both sides of the electrode sheet is easy to control the porosity in a single manufacturing process, so it is advantageous to manufacture electrodes with various porosity shapes.

[FIG. 1]

EP 4 358 172 A1

**Description**

[Technical Field]

The present invention relates to an electrode manufacturing device and a method for manufacturing electrodes using the same.

This application claims the benefit of priority based on Korean Patent Application No. 10-2022-0064000 filed on May 25, 2022, and all contents disclosed in the literature of the Korean Patent Application are included as part of this specification.

[Background Technology of the Invention]

In recent years, secondary batteries have been widely applied not only to small devices such as portable electronics, but also to medium and large devices such as battery packs or power storage in hybrid and electric vehicles, and among these secondary batteries, lithium secondary batteries with high energy density and discharge voltage have been widely researched, commercialized, and used.

A secondary battery includes an electrode assembly comprising a positive electrode, a negative electrode, and a separator; an electrolyte; and a multilayer sheath protecting the electrode assembly as a body, and such secondary batteries may be used in the form of a battery module with a plurality of cells.

Here, the electrode assemblies are broadly categorized into cylindrical and plate types according to the form in which they are embedded in the case (external structure), and jelly-roll and stack-types according to the stacking form of the electrode assemblies (internal structure).

Among them, jelly-roll type electrode assemblies can be made by stacking long sheet-like positive electrodes and negative electrodes with separators interposed therebetween, and then winding them into a cylindrical structure in cross-section, or by winding them into a cylindrical structure and compressing them in a unilateral direction to form a roughly plate-like structure in cross-section. In other words, these jelly-roll type electrode assemblies are suitable for cylindrical batteries, but have disadvantages such as detachment of the electrode active material and low space utilization when applied to prismatic or pouch-type batteries. In addition, it is difficult to fully impregnate to the center part of the wound electrode assembly with electrolyte during cell assembly.

On the other hand, the stack-type electrode assembly can be made into a plate-like structure by cutting out the positive electrode and negative electrode in units of a predetermined size and stacking them sequentially after interposing a separator. Therefore, the stack-type electrode assembly has the advantage that it is easy to obtain a prismatic shape, but it has the disadvantage that the manufacturing process is cumbersome and the electrodes are pushed out when an impact is applied, causing a short circuit.

In order to solve these problems, a stack-folding type electrode assembly, which is a mixture of the above jelly-roll type and the stack-type, has been developed as an advanced structure in which a full cell of a positive electrode/separator/negative electrode structure of a certain unit size or a bicell of a positive electrode/separator/negative electrode structure is folded using a long and continuous separation film.

However, in general, stack-folding type electrode assemblies have the disadvantage of poor wettability when impregnated with electrolyte during battery manufacturing, as the outer surface of the stack-folding type electrode assembly is covered with a separation film, and the separation film is present in multiple layers on the side of some full cells or bi-cells. Since the electrolyte is an essential component for the operation of the battery, the low wettability of the electrolyte leads to a decrease in performance and a shortening of the battery life.

To address these issues, techniques have been developed to control the porosity of the active material layer formed on both sides of the electrode sheet based on the position of each electrode stacked in a stack-folding type electrode assembly by introducing through holes in the separator provided in the conventional electrode. However, the introduction of through holes in the separator can cause short circuits. In addition, the technology for controlling the porosity of the active material layer formed on the surface of the electrode has a limitation that it is difficult to individually control the porosity according to the position of the active material layer relative to the electrode sheet during the manufacturing process of the electrode.

[Related Art Documents]

[Patent document ]

Korean Patent Publication No. 10-2007-0114412

Korean Patent Publication No. 10-2013-0144120

[Description of the technology]

[Technical Problem]

Accordingly, the object of the present invention is to provide an electrode having improved wettability to electrolyte when applied to a jelly-rolled type and/or stack-folding type electrode assembly, and a technique for manufacturing the same.

[Technical Solution]

To solve the above-mentioned problems,

in an exemplary embodiment,
the present invention provides an electrode manufacturing device including:

a coating portion that applies an electrode slurry to a surface of an electrode sheet that is transported in horizontal and vertical directions with respect to the direction in which gravity is acting; and
a drying portion for drying the applied electrode slurry,
wherein the coating portion includes: a first coating portion that applies a first electrode slurry to a first side of the electrode sheet that is transported in a horizontal direction with respect to the direction in which gravity is acting; and a second coating portion that applies a second electrode slurry to a second side of the electrode sheet in which the first electrode slurry is applied and that is transported in a direction perpendicular to the direction in which gravity is acting.

Here, the first coating portion and the second coating portion may each be applied by one or more of a slot-die coater and a slot-nozzle coater.
In addition, the first coating portion and the second coating portion may be spaced apart such that the time it takes for any point included in the electrode sheet to be applied with the second electrode slurry by the second coating portion immediately after the first electrode slurry is applied by the first coating portion is 2 seconds or less.
Furthermore, the drying portion may include: a first drying portion that primarily dries by irradiating light or wavelengths to the electrode slurry applied to both sides of the electrode sheet; and a second drying portion that secondarily dries by applying heat to the primarily dried electrode slurry.
As an example, the first drying portion may include an ultraviolet dryer, a near-infrared dryer, or a far-infrared dryer, and the second drying portion may include at least one of a hot air dryer and a vacuum oven.
In addition, in an exemplary embodiment,
the present invention provides an electrode manufacturing method performed using the above-mentioned electrode manufacturing device.
Specifically, the electrode manufacturing method comprises:

applying a first electrode slurry to a first side of an electrode sheet that is transported in a horizontal direction with respect to the direction in which gravity is acting;
applying a second electrode slurry to a second side of the electrode sheet that is transported in a direction perpendicular to the direction in which gravity is acting and to which the first electrode slurry was applied; and
drying an electrode sheet on which the first electrode slurry and the second electrode slurry have been applied to both sides.

In addition, the first electrode slurry and the second electrode slurry may have a viscosity of 1,000 cps to 20,000 cps at 25°C, respectively, and the ratio ($B_1/B_2$) of the viscosity ($B_1$) of the first electrode slurry to the viscosity ($B_2$) of the second electrode slurry may be between 1.5 and 10.
Furthermore, the first electrode slurry and the second electrode slurry may have at least 60 wt.% solid content.
Additionally, the electrode sheet may be transported at a speed of 30 m/min to 100 m/min.
Moreover, drying the electrode sheet may include: a first drying step that uses light or wavelengths to provisionally dry the electrode slurry applied to both sides of the electrode sheet; and a second drying step that uses heat to completely dry the provisionally dried electrode slurry.
Furthermore, in an exemplary embodiment,
the present invention provides an electrode manufactured by the above-mentioned electrode manufacturing device according to the present invention.

The electrode comprises an electrode sheet, and a first active material layer and a second active material layer formed on both sides of the electrode sheet,

wherein the first active material layer and the second active material layer may have a difference in porosity.

[Advantageous Effects]

An electrode manufacturing device and manufacturing method according to the present invention can improve both processability and productivity in electrode manufacturing by having a configuration of applying a first electrode slurry to a first side of an electrode sheet transported in a horizontal direction with respect to the direction of gravity, applying a second electrode slurry to a second side of an electrode sheet transported in a direction perpendicular to the direction of gravity, and drying the electrode in two steps.

Furthermore, the electrode manufactured by the electrode manufacturing device and manufacturing method according to the present invention has the advantages of excellent adhesion force between the electrode sheet and the active material layer, and easy control of the porosity of the active material layers on both sides, so that an active material layer with different porosities in each layer can be formed in a single manufacturing process, and thus electrodes having various porosity shapes can be manufactured.

[Brief Description of the Drawings]

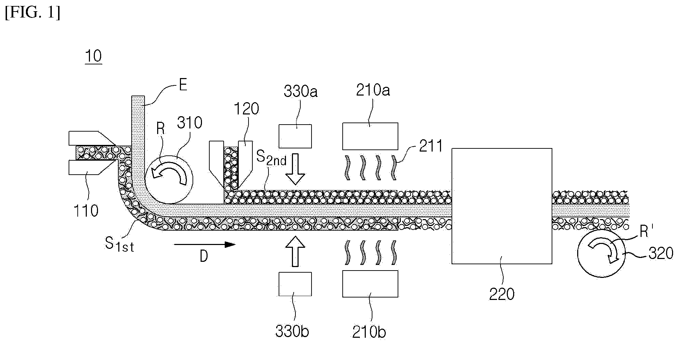

FIG. 1 is a schematic diagram illustrating the structure of an electrode manufacturing device according to the present invention.

[Best Mode for Carrying Out the Invention]

While the present invention may be variously changed and have various embodiments, specific embodiments will be described in detail below.

However, it is to be understood that the present invention is not limited to the specific embodiments described herein but includes all modifications, equivalents, and substitutions included in the spirit and the scope of the present invention.

In the present invention, it should be understood that terms such as "include" or "have" are intended to indicate the presence of a feature, number, step, operation, component, part, or a combination thereof described on the specification, and they do not preclude the possibility of the presence or addition of one or more other features, numbers, steps, operations, components, parts or combinations thereof.

In addition, in the present invention, when a portion such as a layer, a film, an area, a plate, and the like are referred to as being "on" another portion, this includes not only the case where the portion is "directly on" another portion but also the case where still another portion is interposed therebetween. On the other hand, when a portion such as a layer, a film, an area, a plate, and the like are referred to as being "under" another portion, this includes not only the case where the portion is "directly under" another portion but also the case where still another portion is interposed therebetween. In addition, to be disposed "on" in the present application may include the case of being disposed at the bottom as well as the top.

Furthermore, the term "electrode sheet" in the present invention may refer to an electrode current collector itself, or to a state in which an active material layer is formed on the surface of the electrode current collector.

Hereinafter, the present invention will be described in more detail.

**Electrode Manufacturing Device**

In an exemplary embodiment, the present invention provides an electrode manufacturing device including:

a coating portion that applies an electrode slurry to a surface of an electrode sheet that is transported in horizontal and vertical directions with respect to the direction in which gravity is acting; and
a drying portion for drying the applied electrode slurry,
wherein the coating portion includes:

a first coating portion that applies a first electrode slurry to a first side of the electrode sheet that is transported in a horizontal direction with respect to the direction in which gravity is acting; and
a second coating portion that applies a second electrode slurry to a second side of the electrode sheet in which the first electrode slurry is applied and that is transported in a direction perpendicular to the direction in which gravity is acting.

FIG. 1 is a structural diagram schematically illustrating the structure of the electrode manufacturing device 10 according to the present invention. Hereinafter, the electrode manufacturing device 10 of the present invention will be described with reference to FIG. 1.

The electrode manufacturing device 10 according to the present invention includes a coating portion for applying an electrode slurry to the surface of the electrode sheet according to each direction when the electrode sheet E is transported in a horizontal direction and a vertical direction with respect to the direction in which gravity acts, and a drying portion for drying the applied electrode slurry.

Here, the electrode sheet E may be transported by a transport portion in a roll-to-roll manner for efficiency of the electrode manufacturing process. The transport portion may have a structure in which transport rollers 310 and 320 are arranged on an upper and/or lower surface of the electrode sheet E, which are supplied from a winding roll (not shown) on which the electrode sheet E is wound. Specifically, at least one or more transport rollers 310 and 320 may be disposed on an upper surface and/or a lower surface of the electrode sheet E. Further, when the transport rollers 310 and 320 are disposed on the upper surface and the lower surface, respectively, they may be able to transport the electrode sheet E by rotating in opposite directions (e.g., R: counterclockwise, R': clockwise) while facing each other on the electrode sheet at points spaced apart from each other. Further, the transport rollers 310 and 320 may be positioned upstream of the point where the coating portion is disposed and/or downstream of the point where the drying portion is disposed, relative to the traveling direction D of the electrode sheet E, to avoid interference with the electrode slurry applied on the electrode sheet E.

Furthermore, the winding roll (not shown) and transport rollers 310 and 320 can be arranged so that the electrode sheet E is transported in a horizontal direction with respect to the direction in which gravity is acting, and then reverses direction during transport to be transported in a vertical direction. Specifically, the first transport roller 310, which first contacts the electrode sheet E supplied from the winding roll, may be positioned at the lower part of the winding roll such that, prior to contact, the electrode sheet E may be transported in the direction of gravity. Furthermore, the electrode sheet E in contact with the first transport roller 310 is switched in the transport direction by the first transport roller 310. The second transport roller 320, which is in secondary contact with the electrode sheet E whose transport direction has been switched, can be disposed at a position having a height corresponding to the first transport roller 310 so that the electrode sheet E can be transported in a direction perpendicular to the direction in which gravity acts after contacting the first transport roller 310. Accordingly, the electrode sheet supplied from the winding roll (not shown) can travel in a horizontal direction with respect to the direction in which gravity acts up to the first transport roller 310, and can travel in a direction perpendicular to the direction in which gravity acts after passing the first transport roller 310.

In addition, the electrode sheet E may have an electrode slurry applied to its surface by a coating portion while traveling in each direction. Specifically, the coating portion includes a first coating portion 110 for applying a first electrode slurry $S_{1st}$ to a first side of the electrode sheet E being transported in a horizontal direction with respect to the direction in which gravity acts; and a second coating portion 120 for applying a second electrode slurry $S_{2nd}$ to a second side of the electrode sheet E being transported in a direction perpendicular to the direction in which gravity acts. Here, the first side of the electrode sheet E may mean a side (i.e., a bottom side) located on the lower side of the electrode sheet E during transportation in a direction perpendicular to the direction in which gravity acts, and the second side, as the other side of the first side, may mean a side (i.e., a top side) located on the upper side of the electrode sheet E during transportation in a direction perpendicular to the direction in which gravity acts.

The first coating portion 110 and the second coating portion 120 may be applied in any manner conventionally applied in the art without being particularly limited, but in particular, one or more of a slot-die coater and a slot-nozzle coater may be applied, respectively.

Additionally, the first coating portion 110 and the second coating portion 120 may be spaced apart by a predetermined distance in order to apply the electrode slurry to the surface when the electrode sheet E is continuously transported in a horizontal direction and a vertical direction with respect to the direction in which gravity acts, respectively. Specifically, the first electrode slurry $S_{1st}$ applied by the first coating portion 110 is located on the lower side of the electrode sheet E when the electrode sheet is transported in a direction perpendicular to the direction in which gravity acts. In this case, the first electrode slurry $S_{1st}$ may not be sufficiently adhered to the electrode sheet E due to the action of gravity. Therefore, the first coating portion 110 and the second coating portion 120 may be disposed at a spaced apart position such that the time it takes for the second electrode slurry $S_{2nd}$ to be applied by the second coating portion 120 immediately after the first electrode slurry $S_{1st}$ is applied by the first coating portion 110 is 2 seconds or less, in order to prevent detachment and/or loss of the first electrode slurry $S_{1st}$ when the electrode sheet E is transported in a direction perpendicular to the direction in which gravity acts.

In one example, the first coating portion 110 and the second coating portion 120 may be spaced apart such that the time it takes for any point on the electrode sheet E to be applied with the second electrode slurry $S_{2nd}$ by the second coating portion 120 after the first electrode slurry $S_{1st}$ is applied by the first coating portion 110 is 0.1 to 1.5 seconds.

The electrode slurry applied by the first coating portion and the second coating portion 110 and 120 may be dried by the drying portion. The drying portion may include a first drying portion 210a and 210b for primarily and provisionally drying the electrode slurry applied to both sides of the electrode sheet E, and a second drying portion 220 for completely drying the provisionally dried electrode slurry.

Specifically, the first drying portion 210a and 210b is a provisional drying device for maintaining shape by preventing detachment and/or loss of the first electrode slurry $S_{1st}$ of the gravity-fed electrode sheet E, and the electrode slurry may be irradiated with light or wavelengths. In general, drying the electrode slurry is performed by applying a high-temperature hot air, which has the problem that the drying time of the electrode slurry is long. In addition, if the temperature of the hot air is increased to solve this problem, the tendency of drying on the surface of the slurry increases, so the migration of high binders in the solvent to the surface of the slurry occurs as the solvent is transported, and the adhesion strength of the active material layer and the electrode sheet decreases. Without such problems, the present invention can provisionally dry the electrode slurry by irradiating energy in the form of light or wavelength for rapid drying of the first electrode slurry $S_{1st}$, which is applied to the electrode sheet and subjected to gravity opposite to the direction of adhered to the electrode sheet.

Such first drying portion 210a and 210b may include, for example, ultraviolet dryers, near-infrared dryers, far-infrared dryers, and the like, and may include, in particular, far-infrared dryers that emit energy with a wavelength of 1 $\mu$m or more, more specifically 5 $\mu$m or more, 10 $\mu$m or more, or 20 $\mu$m or more, to implement a uniform drying rate of the electrode slurry. The far-infrared dryer, unlike the near-infrared dryer or infrared dryer conventionally applied in the art, has the advantage of being energy efficient due to its long light or wavelength, and of being able to apply energy uniformly to the interior as well as the surface of the slurry, thereby increasing the adhesion between the slurry and the electrode sheet in a short time.

Here, the first drying portions 210a and 210b may emit energy at a power density of 50 kW/m² to 1,000 kW/m², and more specifically, may emit energy at a power density of 50 kW/m² to 500 kW/m²; 50 kW/m² to 250 kW/m²; or 50 kW/m² and 200 kW/m². By controlling the power density of the first drying portions 210a and 210b to the above range, the present invention is able to quickly dry the first electrode slurry $S_{1st}$ applied to the first side of the electrode sheet E during transport in the horizontal direction before it is detached and/or lost, and can prevent an excessive power density from inducing uneven drying of the active material layer.

Additionally, the second drying portion 220 is a device for uniformly and completely drying the electrode slurry that is provisionally dried by light or wavelength, and heat can be applied to the provisionally dried electrode slurry.

Furthermore, the second drying portion 220 may separately include a wall blocking the periphery except for the inlet and outlet for bringing in and taking out the electrode sheet E. The second drying portion 220 applies energy in the form of heat to the surface of the electrode sheet E for drying the electrode slurry of the electrode sheet E when the electrode sheet E is brought into the wall. Here, the wall may perform a function to minimize the loss of the applied heat, and is preferably made of an insulating material for this purpose.

In addition, the second drying portion 220 may include, without limitation, any of those conventionally applied in the art for applying energy in the form of heat, but may specifically include a hot air dryer, a vacuum oven, and the like, either singly or in combination.

Furthermore, the second drying portion 220 may further include a filtering device that generates a flow of air inside the wall to flow along the surface of the electrode slurry, and captures and filters the flow of air again to filter out solvent components volatilized on the surface due to drying of the electrode slurry; and a heat exchanger to recover heat energy from the captured air flow. By further including the filtering device and the heat exchanger in the second drying portion 220, the present invention can increase both the drying efficiency of the electrode slurry and the energy efficiency during the process.

Meanwhile, the electrode manufacturing device 10 according to the present invention may further include an inspection portion 330a and 330b for measuring a loading amount and/or a thickness of each electrode slurry applied to both sides of the electrode sheet E after the electrode slurry is applied to both sides of the electrode sheet E and before it is dried by the drying portion. Specifically, the inspection portion 330a and 330b may include an optical system, spectroscopy, or the like to measure or determine the thickness and/or loading amount of the electrode slurry applied to the surface of the electrode sheet E. The electrode manufacturing device 10 can control the drying conditions of the first drying portion 210a and 210b and the second drying portion 220 before drying of the electrode slurry according to the results measured and/or determined in the inspection portion 330a and 330b, thereby reducing the defect rate of the electrode.

By having the above-described configuration, the electrode manufacturing device 10 according to the present invention can increase the space utilization of a production facility and improve productivity in electrode manufacturing. Furthermore, if the electrode manufacturing device 10 selectively applies gravity to the first side of the electrode sheet during electrode manufacturing to form an active material layer of the same composition on the electrode sheet, it is possible to manufacture electrodes with different porosities on both sides, so that the electrodes manufactured thereby can be useful for electrode assemblies with low electrolyte wettability, such as jelly-roll type and/or stack-folding type electrode assemblies.

**Electrode Manufacturing Method**

In addition, in an exemplary embodiment, the present invention provides an electrode manufacturing method performed using an electrode manufacturing device according to the present invention described above.

The electrode manufacturing method according to the present invention includes applying an electrode slurry to both sides of a transported electrode sheet, respectively, and drying it in two steps. Specifically, the electrode manufacturing method includes steps of: applying a first electrode slurry to a first side of an electrode sheet that is transported in a horizontal direction with respect to the direction in which gravity is acting; applying a second electrode slurry to a second side of an electrode sheet that is transported in a direction perpendicular to the direction in which gravity is acting and to which the first electrode slurry was applied; and drying an electrode sheet on which a first electrode slurry and a second electrode slurry have been applied to both sides.

The step of applying the first electrode slurry is a step of applying the electrode slurry to the side, that is, the first side, where gravity is acting in the direction opposite to the direction of the adhesion force between the electrode sheet and the electrode slurry, among the two sides of the electrode sheet when the electrode sheet is transported in a direction perpendicular to the direction where gravity is acting. The first electrode slurry applied in this step, when dried, can form an active material layer having a porosity greater than the average porosity of the active material layers formed on both sides of the electrode sheet.

Furthermore, the step of applying the second electrode slurry is a step of applying the electrode slurry to the side, that is, the second side, where gravity is acting, in the direction where the adhesion force between the electrode sheet and the electrode slurry is applied, among the two sides of the electrode sheet when the electrode sheet is transported in a direction perpendicular to the direction where gravity is acting. The second electrode slurry applied in this step, when dried, can form an active material layer with a porosity smaller than the average porosity of the active material layers formed on both sides of the electrode sheet.

Here, the first electrode slurry and the second electrode slurry applied to both sides of the electrode sheet may have a high solid content in terms of uniformity of the electrode composition and capacity of the cell. Specifically, the first electrode slurry and the second electrode slurry may each include a solid content of at least 60 wt.%, based on the total weight of the slurry, and more specifically, may include a solid content of 60 wt.% to 95 wt.%; 60 wt.% to 90 wt.%; 65 wt.% to 85 wt.%; or 65 wt.% to 80 wt.%.

Further, the first electrode slurry and the second electrode slurry may have a viscosity in a certain range. Specifically, the first electrode slurry and said second electrode slurry may each have a viscosity of from 1,000 cps to 20,000 cps at 25°C, and more specifically, from 1,000 cps to 10,000 cps; 1,000 cps to 8,000 cps; 2,000 cps to 6,000 cps; 5,000 cps to 15,000 cps; 8,000 cps to 15,000 cps; 3,000 cps to 5,000 cps; or 10,000 cps to 12,000 cps.

In addition, the first electrode slurry and the second electrode slurry may have a constant viscosity ratio. For example, the viscosity $B_1$ of the first electrode slurry and the viscosity $B_2$ of the second electrode slurry may have a ratio $(B_1/B_2)$ of 1.5 to 10, more specifically, a ratio $(B_1/B_2)$ of 1.5 to 8; 2 to 6; 2 to 4; or 2.5 to 3.5. These viscosities of the first electrode slurry and the second electrode slurry may be controlled by, but are not limited to, controlling the content of solids and/or binders in the slurry.

By controlling the respective viscosity and viscosity ratio of the first electrode slurry and the second electrode slurry to satisfy the above ranges, the present invention can implement a high adhesion of the first electrode slurry to the first side of the electrode sheet, which can prevent detachment and loss of the first active material layer, increase the drying efficiency when drying the electrode, and form an active material layer with a uniform porosity on both sides of the electrode sheet.

Furthermore, the step of drying the electrode sheet is a step of drying the electrode slurry applied to both sides of the electrode sheet, and the step may be performed by a plurality of steps. In one example, the step of drying the electrode sheet may include a first drying step of drying the electrode slurry applied to both sides of the electrode sheet using light or wavelengths; and a second drying step of completely drying the provisionally dried electrode slurry using heat.

The drying steps of the present invention include a first drying step in which the first electrode slurry is applied with high energy to provisionally dry the first electrode slurry in a short period of time to prevent detachment and/or loss of the first electrode slurry from the first side of the electrode sheet where gravity is acting in a direction opposite to the direction of adhesion force between the electrode sheet and the electrode slurry.

To this end, the first drying step may apply high energy to the first electrode slurry by means of heat or wavelength, but may apply the energy at a power density of from 50 kW/m$^2$ to 1,000 kW/m$^2$, and more particularly may apply the energy at a power density of from 50 kW/m$^2$ to 500 kW/m$^2$; from 50 kW/m$^2$ to 250 kW/m$^2$; or from 50 kW/m$^2$ to 200 kW/m$^2$. By controlling the power density applied in the first drying step to the above range, the present invention can significantly increase the molecular momentum of the solvent contained in the first electrode slurry and the second electrode slurry. Therefore, before the first electrode slurry is detached and/or lost, the solvent of each electrode slurry can be rapidly volatilized without rapidly increasing the surface temperature of each electrode slurry that occurs when using high-temperature hot air. In addition, and the present invention can prevent excessive power density from inducing uneven drying of the active material layer.

Furthermore, the second drying step is a step of applying heat to both sides of the electrode sheet in order to uniformly and completely dry the provisionally dried electrode slurry. In the second drying step, the solvent remaining in the slurry can be completely removed by applying heat using one or more of a hot air dryer and a vacuum oven.

In this case, the temperature of the heat applied to the electrode slurry in the second drying step may be 150°C or more, more specifically 150~200°C.

Meanwhile, in order to control the loading amount and drying speed of the electrode slurry applied to the surface of the electrode sheet, the transport speed of the electrode sheet may be controlled to be constant to satisfy a predetermined range. Specifically, the electrode sheet may be transported at a speed of 30 m/min to 100 m/min; more specifically, it may be transported at a speed of 30 m/min to 80 m/min; or 30 m/min to 60 m/min. If the transporting speed of the electrode sheet exceeds the above range, there is a problem that the energy density of the manufactured electrode is lowered, as well as the time for gravity to act on the first electrode slurry applied to the first side is significantly reduced, which does not sufficiently induce a deviation in the porosity of the active material layer formed on both sides of the electrode sheet. Furthermore, when the transporting speed of the electrode sheet is lower than the above range, a substantial amount of time is required for the first electrode slurry applied to the first side of the electrode sheet to dry, resulting in detachment and/or loss of the first active material layer provided on the first side.

## Manufactured Electrode for a Secondary Battery

The present invention further provides, in an exemplary embodiment, an electrode for a secondary battery manufactured by the above-described electrode manufacturing method.

The electrode for a secondary battery according to the present invention is a positive electrode or negative electrode used in a lithium secondary battery, which is manufactured by the electrode manufacturing device and/or the electrode manufacturing method according to the present invention as described above. The electrode is manufactured by applying a first electrode slurry to a first side of the electrode sheet while the electrode sheet is continuously transported in a horizontal direction with respect to the direction in which gravity is acting, and applying a second electrode slurry to a second side of the electrode sheet being transported in a direction perpendicular to the direction in which gravity is acting, and then drying the electrode in two steps, and the technical feature is that the porosity of the active material layers on both sides is different by i) controlling the viscosity conditions of the first electrode slurry and the second electrode slurry, and ii) allowing gravity to act in the direction opposite to the direction of the adhesion force between the electrode sheet and the first electrode slurry on the first side where the first electrode slurry is applied before drying.

The electrode for a secondary battery according to the present invention has the advantage of easily solving the electrolyte wettability depending on the structure of the electrode assembly, such as a jelly-roll type electrode assembly or a stack-folding type electrode assembly, since it exhibits excellent electrolyte wettability while maintaining a high energy density of the electrode due to the different porosity of the active material layers provided on both sides. In addition, the electrode has excellent thickness uniformity, which enables high performance such as energy density of the battery to be implemented. Furthermore, the electrode has the advantage of being able to further improve the performance of the electrode by uniformly forming an electrode film on the surface during the activation process of the battery due to the improved electrolyte wettability.

In this case, the active material layers formed on both sides of the electrode for a secondary battery may have an average porosity 20~40%; or 20~30%. In addition, the porosity of each of the active material layers formed on both sides of the electrode for a secondary battery may have a deviation of 1~10%; or 1~5% from the average porosity.

By satisfying the average porosity and porosity deviation of the active material layers on both sides of the electrode to the above ranges, the present invention can prevent the energy density of the electrode from being reduced due to porosity and porosity deviation exceeding the above ranges, and can prevent the electrolyte wettability of the electrode from not being improved due to porosity and porosity deviation below the above ranges.

[Mode for Carrying Out the Invention]

Hereinafter, the present invention will be described in more detail by way of examples and experimental examples.

However, the following examples and experimental examples are only illustrative of the present invention, and the contents of the present invention are not limited to the following examples.

**Examples and Comparative Examples.**

A positive electrode for a secondary battery was prepared using an electrode manufacturing device including a first coating portion and a second coating portion for applying an electrode slurry to both sides of an electrode sheet, and a first drying portion and a second drying portion for continuously drying the applied electrode slurry.

Specifically, $LiNi_{0.6}Co_{0.2}Mn_{0.2}O_2$ with a particle size of 5 $\mu$m was prepared as a positive electrode active material, and polyvinylidene fluoride was mixed with N-methylpyrrolidone (NMP) as a carbon-based conductive agent and binder to prepare a first electrode slurry (solid content: 75%) and a second electrode slurry (solid content: 70%). The slurries were then injected into the first and second coating portions, respectively, applied on both sides of an aluminum sheet, and dried to prepare a positive electrode for the secondary battery.

At this time, the separation distance between the first coating portion and the second portion coating was arranged such that any point on the electrode sheet was within 1 second (1 second $\pm$ 0.3 seconds) of the application of the second electrode slurry by the second coating portion immediately after the application of the first electrode slurry by the first coating portion, and the transport speed of the aluminum sheet was controlled at 50 m/min.

In addition, ① the transport direction of the electrode sheet (based on the direction of gravity) during the operation of the first coating portion and the second coating portion, ② the viscosity of the first electrode slurry and the second electrode slurry at 25°C, and ③ the drying method of the first drying portion and the second drying portion are as shown in Table 1 below.

[Table 1]

|  | Coating portion | | Electrode slurry viscosity [cps] | | Drying method | |
|---|---|---|---|---|---|---|
|  | First coating portion | Second coating portion | First electrode slurry | Second electrode slurry | First drying portion | Second drying portion |
| Example 1 | Horizontal transport | Vertical transpo rt | 11,000 | 4,000 | Far infrared drying | Hot air drying |
| Example 2 | Horizontal transport | Vertical transpo rt | 5,000 | 4,000 | Far infrared drying | Hot air drying |
| Example 3 | Horizontal transport | Vertical transpo rt | 50,000 | 4,000 | Far infrared drying | Hot air drying |
| Example 4 | Horizontal transport | Vertical transpo rt | 11,000 | 4,000 | Hot air drying | Hot air drying |
| Example 5 | Horizontal transport | Vertical transpo rt | 11,000 | 4,000 | Infrared drying | Hot air drying |
| Example 6 | Horizontal transport | Vertical transpo rt | 11,000 | 4,000 | Hot air drying | Far infrared drying |
| Comparative Example 1 | Vertical transport | Vertical transpo rt | 11,000 | 4,000 | Far infrared drying | Hot air drying |
| Comparative Example 2 | Horizontal transport | Horizo ntal transpo rt | 11,000 | 11,000 | Far infrared drying | Hot air drying |

**Examples.**

The following experiments were conducted to evaluate the physical properties of the electrodes for the secondary battery manufactured according to the present invention.

a) Evaluation of adhesion force between the electrode sheet and the first active material layer

The positive electrodes for the secondary battery prepared in the Example and Comparative Examples were cut into rectangles of 2.5 cm wide × 10 cm long, and cellophane tape was attached to the surface of the first active material layer formed using the first electrode slurry. Then, a non-coated portion of the electrode sheet without an active material layer was fixed, and the stress when the cellophane tape attached to the active material layer was peeled off in a 180° direction at a speed of 50 mm/min was measured. The average adhesion force between the electrode sheet and the first active material layer was obtained by performing 10 measurements and calculating the average value. The results are shown in Table 2 below.

b) Evaluation of a solid content loss rate of the first active material layer

The first active material layer formed using the first electrode slurry was separated from the positive electrodes for the secondary battery prepared in the Example and Comparative Examples, respectively, and weighed. The weight change was then calculated relative to the solid content contained in each slurry. If the changed weight showed a negative value, it was determined that the electrode active material was lost, and the results are shown in Table 2.

c) Evaluation of thickness uniformity of the active material layer

Using a scanning electron microscope (FE-SEM, JEOL JSM-7200F), cross-sectional images were obtained by analyzing the cross-sectional structure of the positive electrodes for the secondary battery prepared in the Example and Comparative Examples. In the obtained images, the thickness of five or more random active material layers was measured and the standard deviation was obtained to evaluate the uniformity of each active material layer formed on both sides of the electrode sheet. If the standard deviation value was less than or equal to 10% of the average thickness of the active material layer, it was evaluated as pass, and if it exceeded 10%, it was evaluated as fail, and the results are shown in Table 2.

d) Evaluation of porosity of the active material layer

The thickness and weight per unit area of the positive electrodes for the secondary battery prepared in the Example and Comparative Examples were measured, and the measured weight per unit area was divided by the volume obtained by multiplying the measured thickness and unit area to obtain the measured density of the active material layer containing pores. Separately, the theoretical density was obtained by multiplying the distribution amount per unit area of the components that make up the electrode (electrode active material, conductive material, binder, etc.) by their respective known true density values. The porosity of the active material layer was calculated from the measured density and theoretical density of the active material layer using the following equation, and the results are shown in Table 2 below.

$$\text{Porosity (\%)} = [(\text{theoretical density of the active material layer})/(\text{measured density of the active material layer})-1] \times 100$$

[Table 2]

| | Adhesion force [N/m] | Solid content loss rate | Thickness uniformity | | Porosity | |
|---|---|---|---|---|---|---|
| | | | First active material layer | Second active material layer | First active material layer | Second active material layer |
| Example 1 | 485 | ≤0.1% | pass | pass | 29% | 24% |
| Example 2 | 289 | ≥10% | fail | pass | 22% | 24% |
| Example 3 | 388 | ≥6% | fail | pass | 36% | 24% |
| Example 4 | 267 | ≥15% | fail | pass | 32% | 24% |
| Example 5 | 436 | ≤0.1% | pass | pass | 37% | 24% |
| Example 6 | 312 | ≥12% | fail | pass | 24% | 26% |
| Comparative Example 1 | 364 | ≤0.1% | pass | pass | 41% | 24% |
| Comparative Example 2 | 459 | ≤0.1% | pass | fail | 28% | 21% |

As shown in Table 2 above, it can be seen that the electrode manufacturing device and electrode manufacturing method according to the present invention not only have excellent processability and productivity for secondary batteries, but also have excellent physical properties of the manufactured electrodes.

Specifically, the positive electrode of the Example according to the present invention was found to have high adhesion force of the first active material layer with gravity acting in a direction opposite to the direction in which the adhesion force between the electrode sheet and the active material layer acts during manufacturing, and to have minimal loss of solid content. In addition, the thickness uniformity of each active material layer formed on the electrode sheet was found to be excellent, and the porosity was found to be 20~30%.

On the other hand, the electrode of the Comparative Example was found to have a high solid content loss rate due to low adhesion force between the electrode sheet and the active material layer. In addition, it was confirmed that the thickness of most of the first active material layer, where gravity acts in the direction opposite to the direction of adhesion force between the electrode sheet and the active material layer, was uneven, and that there was a large variation in porosity even it was uniform.

From these results, the electrode manufacturing device and electrode manufacturing method according to the present invention have the advantages of excellent space utilization, processability and productivity in electrode manufacturing, as well as the advantages that the manufactured electrode has excellent adhesion force between the electrode sheet and the active material layer, and the porosity of the active material layer formed on both sides of the electrode sheet can be easily controlled in a single manufacturing process, so that electrodes having various porosity shapes can be manufactured.

Although the above has been described with reference to a preferred embodiment of the present invention, a person skilled in the art or having ordinary knowledge in the art will understand that various modifications and changes can be made to the present invention without departing from the field of thought and technology described in the following patent claims.

Accordingly, the technical scope of the invention is not limited to what is described in the detailed description of the specification, but must be determined by the claims of the patent.

[Reference numerals]

10: ELECTRODE MANUFACTURING DEVICE
110: FIRST COATING PORTION 120: SECOND COATING PORTION
210a AND 210b: FIRST DRYING PORTION
211: LIGHT OR WAVELENGTH
220: SECOND DRYING PORTION
310 AND 320: TRANSPORT ROLLERS
330a AND 330b: INSPECTION PORTION
E: ELECTRODE SHEET
D: ELECTRODE SHEET TRAVEL DIRECTION
R AND R': TRANSPORT ROLLER ROTATION DIRECTION
$S_{1st}$: FIRST ELECTRODE SLURRY
$S_{2nd}$: SECOND ELECTRODE SLURRY

**Claims**

1. An electrode manufacturing device comprising:

a coating portion that applies an electrode slurry to a surface of an electrode sheet that is transported in horizontal and vertical directions with respect to the direction in which gravity is acting; and
a drying portion for drying the applied electrode slurry,
wherein the coating portion comprises:

a first coating portion that applies a first electrode slurry to a first side of the electrode sheet that is transported in a horizontal direction with respect to the direction in which gravity is acting; and
a second coating portion that applies a second electrode slurry to a second side of the electrode sheet in which the first electrode slurry was applied and that is transported in a direction perpendicular to the direction in which gravity is acting.

2. The electrode manufacturing device of claim 1, wherein the first coating portion and the second coating portion are each applied by one or more of a slot-die coater and a slot-nozzle coater.

3. The electrode manufacturing device of claim 1, wherein the first coating portion and the second coating portion are spaced apart such that the time it takes for any point included in the electrode sheet to be applied with the second electrode slurry by the second coating portion immediately after the first electrode slurry is applied by the first coating portion is 2 seconds or less.

4. The electrode manufacturing device of claim 1, wherein the first side is located on the lower side of the electrode sheet when the electrode sheet is transported in a direction perpendicular to the direction in which gravity is acting.

5. The electrode manufacturing device of claim 1, wherein the drying portion comprises:

   a first drying portion that primarily dries by irradiating light or wavelengths to the electrode slurry applied to both sides of the electrode sheet; and
   a second drying portion that secondarily dries by applying heat to a primarily dried electrode slurry.

6. The electrode manufacturing device of claim 5, wherein

   the first drying portion comprises an ultraviolet dryer, a near-infrared dryer, or a far-infrared dryer, and
   the second drying portion comprises at least one of a hot air dryer and a vacuum oven.

7. An electrode manufacturing method performed using the electrode manufacturing device according to claim 1, comprising:

   applying a first electrode slurry to a first side of an electrode sheet that is transported in a horizontal direction with respect to the direction in which gravity is acting;
   applying a second electrode slurry to a second side of the electrode sheet that is transported in a direction perpendicular to the direction in which gravity is acting and to which the first electrode slurry was applied; and
   drying the electrode sheet on which the first electrode slurry and the second electrode slurry have been applied to both sides.

8. The electrode manufacturing method of claim 7, wherein

   the first electrode slurry and the second electrode slurry have a viscosity of 1,000 cps to 20,000 cps at 25°C, respectively, and
   the ratio ($B_1/B_2$) of the viscosity ($B_1$) of the first electrode slurry to the viscosity ($B_2$) of the second electrode slurry is between 1.5 and 10.

9. The electrode manufacturing method of claim 7, wherein the first electrode slurry and the second electrode slurry have at least 60 wt.% solid content.

10. The electrode manufacturing method of claim 7, wherein the electrode sheet is transported at a speed of 30 m/min to 100 m/min.

11. The electrode manufacturing method of claim 7, wherein drying the electrode sheet comprises:

    a first drying step that uses light or wavelengths to provisionally dry the electrode slurry applied to both sides of the electrode sheet; and
    a second drying step that uses heat to completely dry the provisionally dried electrode slurry.

12. An electrode for lithium secondary battery manufactured by the electrode manufacturing device according to claim 1, comprising:

    an electrode sheet; and
    a first active material layer and a second active material layer formed on both sides of the electrode sheet, wherein the first active material layer and the second active material layer have a difference in porosity.

[FIG. 1]

## INTERNATIONAL SEARCH REPORT

International application No.

**PCT/KR2023/006454**

### A. CLASSIFICATION OF SUBJECT MATTER

**H01M 4/04**(2006.01)i; **H01M 4/13**(2010.01)i; **H01M 4/139**(2010.01)i; **H01M 4/02**(2006.01)i

According to International Patent Classification (IPC) or to both national classification and IPC

### B. FIELDS SEARCHED

Minimum documentation searched (classification system followed by classification symbols)

H01M 4/04(2006.01); B05C 5/00(2006.01); B05C 5/02(2006.01); B05C 9/04(2006.01); B05C 9/14(2006.01); H01M 10/40(2006.01); H01M 4/02(2006.01); H01M 4/36(2006.01); H01M 4/66(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전극(electrode), 슬러리(slurry), 코팅(coating), 방향(direction), 건조(dry), 수직 (vertical), 수평(horizontal), 공극률(porosity)

### C. DOCUMENTS CONSIDERED TO BE RELEVANT

| Category* | Citation of document, with indication, where appropriate, of the relevant passages | Relevant to claim No. |
|---|---|---|
| X | KR 10-2012-0031436 A (KABUSHIKI KAISHA TOSHIBA) 03 April 2012 (2012-04-03)<br>See claims 1, 3, 5 and 9-10; paragraphs [0003] and [0041]-[0047]; and figure 8. | 1-4,7,9 |
| Y | | 5-6,8,10-12 |
| Y | JP 2019-091793 A (ASAHI KASEI CORP.) 13 June 2019 (2019-06-13)<br>See paragraphs [0053]-[0055]. | 5-6,8,10-11 |
| Y | JP 2000-090981 A (JAPAN STORAGE BATTERY CO., LTD.) 31 March 2000 (2000-03-31)<br>See claim 1. | 12 |
| A | JP 2017-079180 A (TORAY ENG CO., LTD.) 27 April 2017 (2017-04-27)<br>See entire document. | 1-12 |

☑ Further documents are listed in the continuation of Box C.  ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **23 August 2023** | **23 August 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2023/006454**

**C.     DOCUMENTS CONSIDERED TO BE RELEVANT**

| Category* | Citation of document, with indication, where appropriate, of the relevant passages | Relevant to claim No. |
|---|---|---|
| A | CN 114472082 A (SHANGHAI LANJUN NEW ENERGY TECHNOLOGY CO., LTD.) 13 May 2022 (2022-05-13)<br>     See entire document. | 1-12 |

Form PCT/ISA/210 (second sheet) (July 2022)

**INTERNATIONAL SEARCH REPORT**
**Information on patent family members**

International application No.

**PCT/KR2023/006454**

| Patent document cited in search report | | | Publication date (day/month/year) | Patent family member(s) | | | Publication date (day/month/year) |
|---|---|---|---|---|---|---|---|
| KR | 10-2012-0031436 | A | 03 April 2012 | CN | 102430498 | A | 02 May 2012 |
| | | | | CN | 102430498 | B | 06 August 2014 |
| | | | | JP | 2012-086212 | A | 10 May 2012 |
| | | | | JP | 5509168 | B2 | 04 June 2014 |
| | | | | KR | 10-1309343 | B1 | 17 September 2013 |
| | | | | US | 2012-0076933 | A1 | 29 March 2012 |
| | | | | US | 9050618 | B2 | 09 June 2015 |
| JP | 2019-091793 | A | 13 June 2019 | JP | 7042589 | B2 | 28 March 2022 |
| JP | 2000-090981 | A | 31 March 2000 | JP | 4258686 | B2 | 30 April 2009 |
| JP | 2017-079180 | A | 27 April 2017 | None | | | |
| CN | 114472082 | A | 13 May 2022 | None | | | |

Form PCT/ISA/210 (patent family annex) (July 2022)

**EP 4 358 172 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220064000
- KR 1020070114412

- KR 1020130144120